# EUROPÄISCHE PATENTSCHRIFT

(11) **EP 1 158 158 B1**
(45) Veröffentlichungstag und Bekanntmachung des Hinweises auf die Patenterteilung: **27.02.2008**
(21) Anmeldenummer: 00111289.5
(22) Anmeldetag: 25.05.2000
(51) Int. Cl.: F02M 31/00

(54) **PTC-Heizeinrichtung**
PTC heating device
Dispositif de chauffage à élément PTC

(43) Veröffentlichungstag der Anmeldung: 28.11.2001
(73) Patentinhaber: DBK David + Baader GmbH, 76870 Kandel (DE)
(72) Erfinder: Bohlender, Franz, 76870 Kandel/Pfalz (DE)
(74) Vertreter: Grünecker, Kinkeldey, Stockmair & Schwanhäusser Anwaltssozietät

(56) Entgegenhaltungen:
- EP-A- 0 162 939
- EP-A- 0 367 631
- EP-A- 0 581 176
- EP-A- 0 657 199
- US-A- 5 270 521
- PATENT ABSTRACTS OF JAPAN vol. 015, no. 250 (E-1082), 26. Juni 1991 (1991-06-26) & JP 03 078455 A (MATSUSHITA REFRIG CO LTD), 3. April 1991 (1991-04-03)

## Beschreibung

Die vorliegende Erfindung bezieht sich auf eine PTC-Heizeinrichtung nach dem Oberbegriff des Anspruchs 1.

PTC-Heizeinrichtungen sind beispielsweise im Zusammenhang mit Dieselmotoren bekannt, wo sie zum elektrischen Beheizen des Dieselkraftstoffes bei tiefen Temperaturen verwendet werden.

Die europäische Patentschrift EP 0 162 939 B1 beschreibt eine PTC-Heizeinrichtung, die in ein Kraftstofffilter integriert ist. Für den Einbau in diese Heizeinrichtung müssen die PTC-Elemente ein Mittelloch aufweisen, das nach der Montage von einem Positionierungsstift des Gehäuses durchdrungen wird. Die PTC-Elemente werden von oben und unten jeweils durch ein Kontaktblech thermisch und elektrisch kontaktiert. Eine mit dem Positionierungsstift verschraubte Federplatte sorgt für den nötigen Kontaktdruck.

Diese Art der Fixierung der PTC-Elemente weist zwei wesentliche Nachteile auf:

Zum einen müssen die PTC-Elemente ein Loch aufweisen, wodurch die Kosten erhöht und die Robustheit verringert wird. Zum anderen erschwert und verteuert die für die Befestigung der Federplatte vorgesehene Schraubverbindung die Montage.

Die europäische Offenlegungsschrift EP 0 581 176 A2 zeigt eine elektrische Heizeinrichtung für Dieselkraftstoff, bei der in einem scheibenförmigen Gehäuse in einer Ausnehmung zwischen zwei ebenen Kontaktscheiben drei scheibenförmige PTC-Elemente angeordnet sind. Die PTC-Elemente sind jeweils durch zwei viertelkreisförmige Stege gehalten und geführt, wobei diese Stege die PTC-Elemente an ihrem Umfang umfassen. Die PTC-Elemente sowie beide Kontaktscheiben werden von an einer Deckplatte sich abstützenden Federn auf segmentförmige gehäusefeste Schultern gedrückt, so dass die Kontaktscheiben im Bereich der Heizelemente vom Dieselkraftstoff umspült werden. Die Haltestege verhindern ein Verschieben der PTC-Elemente und der Kontaktscheiben in radialer Richtung, die endgültige Sicherung in axialer Richtung wird jedoch erst durch die Montage der Deckplatte, die mit dem Gehäuse verbunden wird, erreicht.

Aufgabe der vorliegenden Erfindung ist es daher, eine PTC-Heizeinrichtung anzugeben, die eine billige Herstellung und vereinfachte Montage der Komponenten erlaubt.

Diese Aufgabe wird durch eine PTC-Heizeinrichtung mit den Merkmalen des Anspruchs 1 gelöst.

Der wesentliche Vorteil der erfindungsgemäßen PTC-Heizeinrichtung besteht darin, dass die Montage der einzelnen Komponenten wesentlich rascher und vollautomatisiert erfolgen kann und die Herstellung der PTC-Elemente vereinfacht und verbilligt wird.

Durch die Fixierung des Federelementes mit Hilfe einer Rastnase am Haltesteg können die Kosten für zusätzliche Schraubverbindungen eingespart werden. Darüber hinaus weist die erfindungsgemäße Lösung im Hinblick auf die spätere Entsorgung nach Ablauf der Produktlebensdauer den Vorteil auf, dass verwertbare Materialien mit weit geringerem Aufwand und höherer Reinheit zurückgewonnen werden können.

Weitere Ausgestaltungen der Erfindung sind Gegenstand mehrerer Unteransprüche.

Gemäß einer bevorzugten Ausführungsform ist das Federelement als ein Federblech ausgebildet, welches wenigstens zwei federnde Ausbiegungen aufweist, mit denen es sich an dem Kontaktblech abstützt. Dies gewährleistet einen gleichmäßigen Anpressdruck der Kontaktplatten an die PTC-Elemente.

Eine besonders einfach herstellbare und rasch montierbare Ausführungsform des Federelementes stellt die Realisierung als ein einziges für alle PTC-Elemente gemeinsames Federblech dar.

Dagegen weist die Ausführung des Federelementes als ein Satz einzelner Federscheiben, von denen jede jeweils einem PTC-Element zugeordnet ist, den Vorteil auf, dass insbesondere für PTC-Elemente mit sehr kleinen Abmessungen noch ein optimaler Anpressdruck erreicht werden kann. Indem der Haltesteg die Federscheibe umgreift, ist neben der Fixierung der Federscheibe gleichzeitig eine exakte Positionierung über dem PTC-Element möglich.

Sieht man entsprechend einer weiteren bevorzugten Ausführungsform für jedes PTC-Element drei Haltestege vor, die um jeweils 120° gegeneinander versetzt entlang des Umfangs eines PTC-Elementes angeordnet sind, verbessern sich die elastischen Eigenschaften des Haltestegs beim Einrasten der Federscheibe. Außerdem kann bei dieser Ausführungsform Material gespart werden.

Bei der Ausführungsform, bei welcher das PTC-Element zwischen einem oberen und einem unteren Kontaktblech angeordnet ist, welche das PTC-Element unmittelbar elektrisch kontaktieren, liegt das PTC-Element mit seiner gesamten Fläche bündig an dem oberen und unteren Kontaktblech an, wodurch seine empfindlichen Oberflächen auch bei starken Temperaturänderungen und Stößen ausreichend geschützt sind. Da außerdem das Volumen zwischen den Kontaktblechen sehr niedrig ist, kann die Heizeinrichtung bereits wenige Sekunden nach dem Einschalten Dieselkraftstoff mit ausreichender Temperatur zur Verfügung stellen und verbessert das Kaltstartverhalten wesentlich. Die direkte elektrische Kontaktierung der PTC-Elemente durch die Kontaktbleche stellt zudem eine sehr einfache und zuverlässige Lösung für den elektrischen Anschluss der PTC-Elemente dar.

Eine stufenförmige Auflagefläche, die gemäß einer weiteren bevorzugten Ausführungsform am Haltesteg vorgesehen ist, sorgt für eine definierte Lagerung des unteren Kontaktbleches und verbessert auf diese Weise die Reproduzierbarkeit des Anpressdrucks.

Anhand der in den beiliegenden Zeichnungen dargestellten bevorzugten Ausgestaltungen wird die Erfindung im folgenden näher erläutert. Es zeigen:
Fig. 1 eine Explosionsdarstellung der PTC-Heizeinrichtung;
Fig. 2 eine perspektivische Darstellung der Heizeinrichtung im fertig montierten Zustand;
Fig. 3 eine Federscheibe mit drei federnden Ausbiegungen;
Fig. 4 eine perspektivische Gesamtansicht der PTC-Heizeinrichtung im montierten Zustand, wobei hier Federscheiben mit vier federnden Ausbiegungen verwendet wurden;
Fig. 5 eine perspektivische Detailansicht von drei Haltestegen, die zu einem PTC-Element gehören.

Im folgenden werden bevorzugte Ausgestaltungen der Erfindung näher beschrieben.

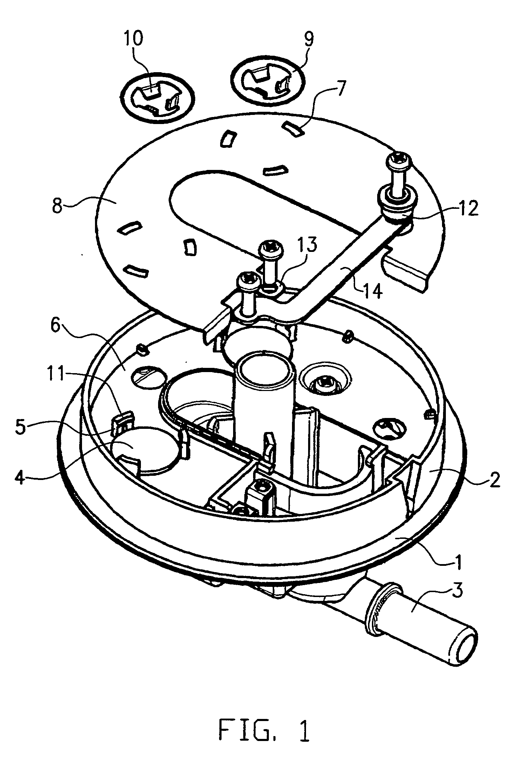

Bei dem in Fig. 1 dargestellten Ausführungsbeispiel handelt es sich um eine PTC-Heizeinrichtung, die in ein Kraftstofffilter integrierbar ist. Dabei ist die PTC-Heizeinrichtung in einem Gehäuseteil 1 aufgebaut und in einem Gehäusedeckel 2 integriert, der auf ein nicht dargestelltes entsprechendes Unterteil gesetzt werden kann, welches eine Filterpatrone enthält.

In diesem Gehäusedeckel 2 befinden sich die Kraftstoffzuleitung 3, der Kraftstoff-Auslass sowie geeignete Fluidkanäle für die Führung des Kraftstoffes (nicht dargestellt).

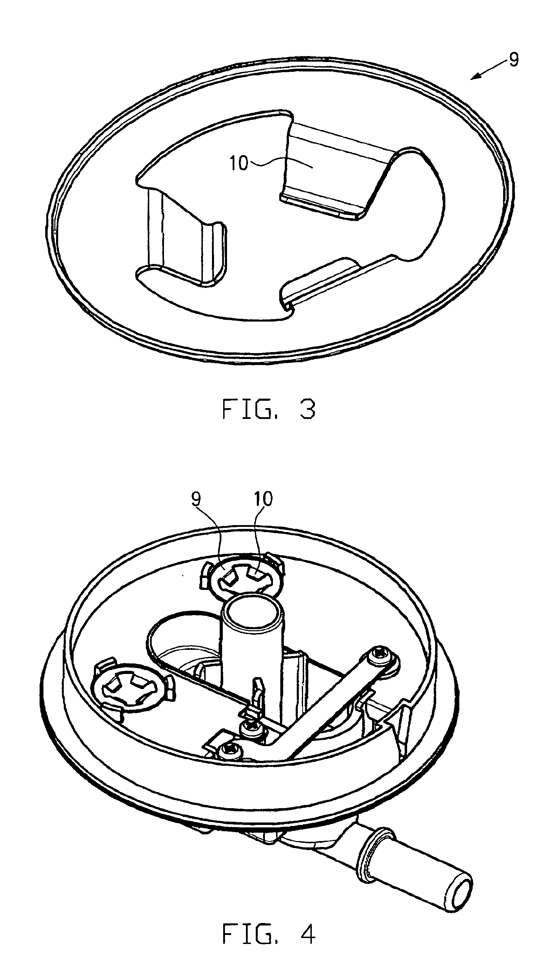

Die Bereitstellung der nötigen Heizenergie erfolgt mittels zweier PTC-Elemente 4. Die PTC-Elemente sind von üblicher Bauart und können eine kreisförmige oder rechteckige Geometrie aufweisen. Sie besitzen eine Dicke von 1 bis 2 mm. Für jedes dieser PTC-Elemente 4 sind drei Haltestege 5 vorgesehen, die um jeweils 120° gegeneinander versetzt entlang des Umfangs der PTC-Elemente 4 angeordnet sind. Die Haltestege 5 weisen, wie später noch genauer anhand von Fig. 4 erklärt wird, eine stufenförmige Auflagefläche auf, auf der zunächst das untere Kontaktblech 6 abgestützt wird.

Entsprechende Öffnungen 7 in dem unteren Kontaktblech 6 gewährleisten, dass der Haltesteg 5 durch das Kontaktblech 6 hinduchtritt. Die beiden PTC-Elemente 4 können nun durch die Haltestege 5 exakt positioniert werden.

Das obere Kontaktblech, das bündig auf den PTC-Elementen angeordnet wird und ebenfalls Öffnungen 7 für die Haltestege aufweist, definiert einen Fluidkanal für die Kraftstoffführung, der ein außerordentlich geringes Volumen beinhaltet.

Die beiden Kontaktbleche 6,8 bestehen in dem dargestellten Ausführungsbeispiel aus Aluminium oder einer Aluminiumlegierung, die eine relativ geringe Wärmekapazität aufweist und einen ausgezeichneten Wärmeleitwert besitzt.

Zur Fixierung der beiden Kontaktbleche 6, 8 zueinander und zur Bereitstellung eines ausreichenden Anpressdruckes werden im vorliegenden Ausführungsbeispiel für jedes PTC-Element 4 gesonderte Federscheiben 9 verwendet. Diese Federscheiben 9 besitzen federnde Ausbiegungen 10, die sich am oberen Kontaktblech 8 abstützen.

Jeder Haltesteg 5 weist an seinem oberen Ende eine Rastnase 11 auf, mit deren

Hilfe die Federscheiben 9 an ihrem äußeren Rand durch Einrasten befestigt werden können. Diese Federscheiben 9 können, je nach benötigtem Anpressdruck, drei oder vier federnde Ausbiegungen 10 aufweisen.

Um die PTC-Elemente 4 mit elektrischer Spannung zu versorgen, sind an den Kontaktblechen 6, 8 entsprechende Schraubkontaktierungen 12, 13 sowie ein leitfähiger Bügel 14 vorgesehen.

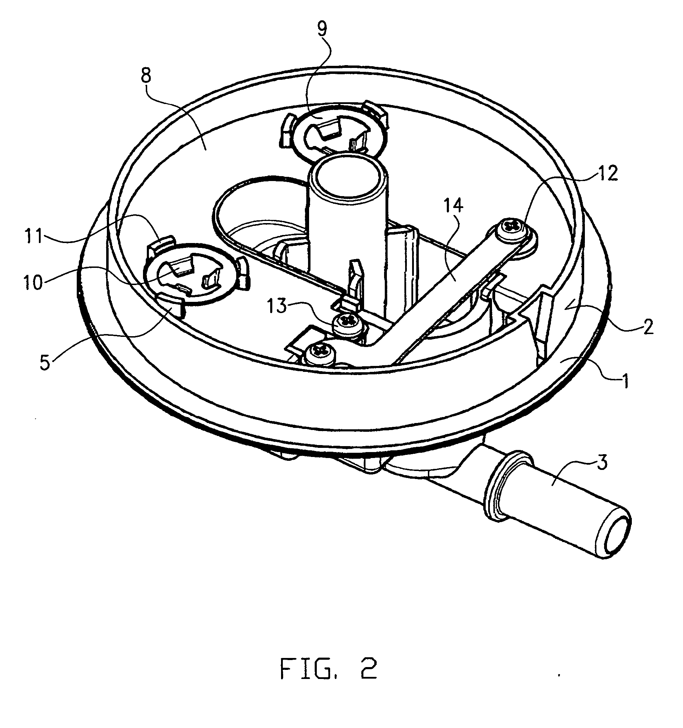

In Fig. 2 ist eine perspektivische Darstellung der PTC-Heizeinrichtung, wenn sie vollständig montiert ist und in den Gehäusedeckel 1 eingebaut ist. Neben den bereits aus Fig. 1 ersichtlichen Merkmalen verdeutlicht Fig. 2, wie die drei Haltestege 5 das obere Kontaktblech durchdringen und für eine Positionierung der Federelemente 10 entlang ihres Umfangs sorgen. Die Fixierung der beiden Federelemente 10 erfolgt über das Einrasten unter die Rastnasen 11. Der nötige Anpressdruck für das obere Kontaktblech 8 wird durch die drei federnden Ausbiegungen 10 an jeder Federscheibe 9 erzeugt, in dem diese sich auf dem Kontaktblech 8 abstützen. Vorteilhaft ist hier vor allem, dass exakt an der Position des unter dem Kontaktblech 8 befindlichen PTC-Elementes 4 ein genau definierter Anpressdruck erreicht werden kann.

Eine einzelne Federscheibe 9, die drei federnde Ausbiegungen 10 aufweist, ist in einer vergrößerten Ansicht in Fig. 3 dargestellt. Eine solche Federscheibe kann aus geeignetem Federstahl hergestellt werden. Neben der Geometrie kann auch durch eine geeignete Materialauswahl Einfluss auf den erzielten Anpressdruck genommen werden.

Anstelle der drei federnden Ausbiegungen 10, die bei dem in Fig. 2 gezeigten Ausführungsbeispiel dargestellt sind, kann die Federscheibe auch vier federnde Ausbiegungen 10 aufweisen, wie dies in Fig. 4 gezeigt ist.

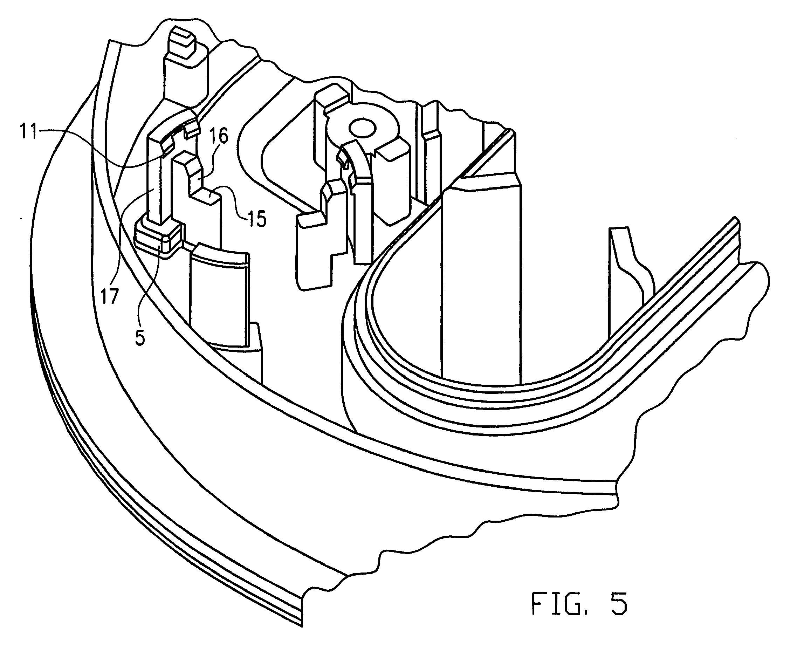

Fig. 5 schließlich stellt eine perspektivische Detailansicht von drei zu einem PTC-Element 4 gehörigen Haltestegen 5 dar. Wie deutlich zu erkennen ist, können die Haltestege direkt in einem Arbeitsgang aus dem Material des Gehäuseteils 2 hergestellt werden. Dieses Gehäuseteil 2 besteht aus einem Kunststoff, vorzugsweise Polyethylen, aus welchem die Haltestege 5 in sehr einfacher Weise gefertigt werden können.

Wie aus dieser Detailansicht erkennbar, besitzt jeder Haltesteg 5 mehrere funktionelle Einheiten: die Auflagefläche 15 unterstützt das untere Kontaktblech 6 und sorgt auf diese Weise für eine definierte Lagerung desselben sowie für die Reproduzierbarkeit des Anpressdrucks. Ein Positionierungssteg 16 sorgt für die Positionierung sowohl des PTC-Elementes 4 wie auch der Federscheibe 9. In der gezeigten bevorzugten Ausführungsform befindet sich die Rastnase 11, welche die Federscheibe 9 fixiert, an einem von dem Positionierungssteg 16 räumlich getrennten Federsegment 17. Auf diese Weise wird eine ausreichende Elastizität der Schnappverbindung gewährleistet.

Beim Starten des Motors, der an diese PTC-Heizeinrichtung angeschlossen ist, wird gleichzeitig Spannung an die PTC-Elemente 4 angelegt. Diese erwärmen in wenigen Sekunden den im Bereich der Heizeinrichtung befindlichen Kraftstoff auf eine Temperatur, die es ihm erlaubt, durch die Filterpatrone zu treten.

## Patentansprüche

1. PTC-Heizeinrichtung für ein gasförmiges oder flüssiges zu beheizendes Medium, vorzugsweise Dieselkraftstoff, mit einem Gehäuseteil (1), an dem ein mit wenigstens einem Kontaktblech (6, 8) in Anlage gehaltenes PTC-Element (4) angeordnet ist, und mit einem Federelement(9), welches einen Kontaktdruck zwischen dem Kontaktblech (6, 8) und dem PTC-Element (4) erzeugt,
wobei das Gehäuse (1) wenigstens einen am Umfang des PTC-Elementes (4) angeordneten Haltesteg (5) aufweist,
**dadurch gekennzeichnet, dass**
der Haltesteg (5) so ausgebildet ist, dass er einen Abschnitt des Federelements (9) zur Erzeugung des Kontaktdrucks umgreift.

2. PTC-Heizeinrichtung nach Anspruch 1, **dadurch gekennzeichnet, dass** das Kontaktblech (6, 8) Öffnungen (7) aufweist, durch die der Haltesteg (5) das Kontaktblech (6, 8) durchdringt.

3. PTC-Heizeinrichtung nach einem der Ansprüche 1 oder 2, **dadurch gekennzeichnet, dass** der Haltesteg (5) eine Rastnase (11) aufweist, in die ein Abschnitt des Federelements (9) einrastet.

4. PTC-Heizeinrichtung nach einem der Ansprüche 1 bis 3, **dadurch gekennzeichnet, dass** das Federelement (9) als Federblech ausgebildet ist, welches wenigstens zwei federnde Ausbiegungen (10) aufweist, mit denen es sich an dem Kontaktblech (6, 8) abstützt.

5. PTC-Heizeinrichtung nach Anspruch 4, **dadurch gekennzeichnet, dass** das Federelement (9) als ein für alle PTC-Elemente (4) gemeinsames Federblech ausgebildet ist, das eine der Zahl der Haltestege (5) entsprechende Anzahl von Öffnungen (7) sowie dazu benachbarte federnde Ausbiegungen (10) aufweist.

6. PTC-Heizeinrichtung nach Anspruch 4, **dadurch gekennzeichnet, dass** das Federelement (9) als eine dem PTC-Element (4) zugeordnete einzelne Federscheibe ausgebildet ist.

7. PTC-Heizeinrichtung nach einem der Ansprüche 1 bis 6, **dadurch gekennzeichnet, dass** für jedes PTC-Element (4) mehrere Haltestege (5) vorgesehen sind, die mit gleichmäßigen Abständen zueinander entlang des Umfangs des PTC-Elementes (4) angeordnet sind.

8. PTC-Heizeinrichtung nach einem der Ansprüche 1 bis 7, **dadurch gekennzeichnet, dass** das PTC-Element (4) zwischen einem oberen (8) und einem unteren (6) Kontaktblech angeordnet ist und dass die Kontaktbleche (6, 8) das PTC-Element (4) unmittelbar elektrisch kontaktieren.

9. PTC-Heizeinrichtung nach Anspruch 8, **dadurch gekennzeichnet, dass** der Haltesteg (5) eine stufenförmige Auflagefläche (15) für das untere Kontaktblech (6) aufweist.

10. PTC-Heizeinrichtung nach einem der Ansprüche 1 bis 9, **dadurch gekennzeichnet, dass** das Gehäuseteil (1) und der Haltesteg (5) einstückig miteinander ausgebildet sind.

## Claims

1. PTC heating device for a gaseous or liquid medium to be heated, preferably diesel fuel, having a housing part (1), on which a PTC element (4) held in contact with at least one contact plate (6, 8) is disposed, and having a spring element (9), which generates a contact pressure between the contact plate (6, 8) and the PTC element (4), wherein the housing (1) has at least one holding web (5) disposed at the circumference of the PTC element (4), **characterised in that** the holding web (5) is so formed that it engages around a section of the spring element (9) to generate the contact pressure.

2. PTC heating device according to claim 1, **characterised in that** the contact plate (6, 8) has apertures (7), through which the holding web (5) penetrates the contact plate (6, 8).

3. PTC heating device according to either of claims 1 or 2, **characterised in that** the holding web (5) has a catch lug (11), into which engages a section of the spring element (9).

4. PTC heating device according to one of claims 1 to 3, **characterised in that** the spring element (9) is formed as a spring plate, which has at least two resilient bent-out sections (10) with which it bears on the contact plate (6, 8).

5. PTC heating device according to claim 4, **characterised in that** the spring element (9) is formed as a spring plate common to all PTC elements (4), which has a number of apertures (7) corresponding to the number of holding webs (5) and resilient bent-out sections (10) adjacent thereto.

6. PTC heating device according to claim 4, **characterised in that** the spring element (9) is formed as a spring disc individually allocated to the PTC element (4).

7. PTC heating device according to one of claims 1 to 6, **characterised in that** for each PTC element (4) plural holding webs (5) are provided, which are arranged at equal intervals relative to one another along the circumference of the PTC element (4).

8. PTC heating device according to one of claims 1 to 7, **characterised in that** the PTC element (4) is disposed between an upper (8) and a lower (6) contact plate and **in that** the contact plates (6, 8) directly electrically contact the PTC element (4).

9. PTC heating device according to claim 8, **characterised in that** the holding web (5) has a step-like bearing face (15) for the lower contact plate (6).

10. PTC heating device according to one of claims 1 to 9, **characterised in that** the housing part (1) and the holding web (5) are formed integrally with one another.

## Revendications

1. Dispositif CPT (coefficient positif de température) pour un fluide gazeux ou liquide à chauffer, de préférence du carburant diesel, comprenant une partie de boîtier (1), sur laquelle est disposé un élément CPT (4) maintenu en appui avec au moins une tôle de contact (6, 8), et un élément de ressort (9), qui génère une pression de contact entre la tôle de contact (6, 8) et l'élément CPT (4), dans lequel
le boîtier (1) présente au moins une nervure de retenue (5) disposée sur le pourtour de l'élément CPT (4),
**caractérisé en ce que**
la nervure de retenue (5) est conçue de telle sorte qu'elle enveloppe un tronçon de l'élément de ressort (9) pour générer la pression de contact.

2. Dispositif de chauffage CPT selon la revendication 1, **caractérisé en ce que** la tôle de contact (6, 8) présente des ouvertures (7) par lesquelles la nervure de retenue (5) pénètre la tôle de contact (6, 8).

3. Dispositif de chauffage CPT selon l'une quelconque des revendications 1 ou 2, **caractérisé en ce que** la nervure de retenue (5) présente un ergot de verrouillage (11) dans lequel s'engage une partie de l'élément de ressort (9).

4. Dispositif de chauffage CPT selon l'une quelconque des revendications 1 à 3, **caractérisé en ce que** l'élément de ressort (9) est conçu comme tôle à ressort qui présente au moins deux pliures (10) faisant ressort, avec lesquelles il s'appuie sur la tôle de contact (6, 8).

5. Dispositif de chauffage CPT selon la revendication 4, **caractérisé en ce que** l'élément de ressort (9) est conçu comme une tôle à ressort commune pour tous les éléments CPT (4), qui présente un nombre d'ouvertures (7) correspondant au nombre de nervures de retenue (5) et des pliures (10) élastiques voisines de ces ouvertures.

6. Dispositif de chauffage CPT selon la revendication 4, **caractérisé en ce que** l'élément à ressort (9) est conçu comme un disque à ressort individuel attribué à l'élément CPT (4).

7. Dispositif de chauffage CPT selon l'une quelconque des revendications 1 à 6, **caractérisé en ce que**, pour chaque élément CPT (4), il est prévu plusieurs nervures de retenue (5) qui sont disposées à des intervalles réguliers les unes des autres le long du pourtour de l'élément CPT (4).

8. Dispositif de chauffage CPT selon l'une quelconque des revendications 1 à 7, **caractérisé en ce que** l'élément CPT (4) est disposé entre une tôle de contact supérieure (8) et une tôle de contact inférieure (6), et **en ce que** les tôles de contact (6, 8) mettent directement en contact électrique l'élément PTC (4).

9. Dispositif de chauffage CPT selon la revendication 8, **caractérisé en ce que** la nervure de retenue (5) présente une surface d'appui (15) en forme de marche pour la tôle de contact (6) inférieure.

10. Dispositif de chauffage CPT selon l'une quelconque des revendications 1 à 9, **caractérisé en ce que** la partie de boîtier (1) et la nervure de retenue (5) sont réalisées d'une seule pièce l'une avec l'autre.
